# EUROPÄISCHE PATENTSCHRIFT

(11) **EP 3 748 574 B1**
(45) Veröffentlichungstag und Bekanntmachung des Hinweises auf die Patenterteilung: **09.07.2025**
(21) Anmeldenummer: 20174603.9
(22) Anmeldetag: 14.05.2020
(51) Int. Cl.: G06T 5/60, G06T 5/70

(54) **ADAPTIVE BEREINIGUNG VON MESSDATEN UM UNTERSCHIEDLICHE ARTEN VON STÖRUNGEN**
ADAPTIVE REMOVAL OF DIFFERENT TYPES OF INTERFERENCE FROM MEASUREMENT DATA
CORRECTION ADAPTATIVE DES DONNÉES MESURÉES EN FONCTION DE DIFFÉRENTS TYPES DE DÉFAILLANCES

(30) Priorität: 06.06.2019 DE 102019208265
(43) Veröffentlichungstag der Anmeldung: 09.12.2020
(73) Patentinhaber: Robert Bosch GmbH, 70442 Stuttgart (DE)
(72) Erfinder: Fischer, Volker, 71229 Leonberg (DE); Mummadi, Chaithanya Kumar, 71296 Heimsheim (DE)

(56) Entgegenhaltungen:
- NI ZEHAO ET AL: "Adaptive Image Filtering Based on Convolutional Neural Network", 26 September 2018, ANNUAL INTERNATIONAL CONFERENCE ON THE THEORY AND APPLICATIONS OF CRYPTOGRAPHIC TECHNIQUES, EUROCRYPT 2018; [LECTURE NOTES IN COMPUTER SCIENCE; LECT.NOTES COMPUTER], SPRINGER, BERLIN, HEIDELBERG, PAGE(S) 369 - 379, ISBN: 978-3-642-17318-9, XP047487199
- SA P K ET AL: "Improved adaptive impulsive noise suppression", IEEE INTERNATIONAL FUZZY SYSTEMS CONFERENCE, 2007. FUZZ-IEEE 2007 IEEE PISCATAWAY, NJ, USA, 2007, pages 288 - 291, XP002799876, ISBN: 1-4244-1209-9

## Beschreibung

Die vorliegende Erfindung betrifft die Signalverarbeitung für physikalische Messdaten, die mit Rauschen und anderen Arten von Störungen behaftet sind.

### Stand der Technik

Die Automatisierung vieler bislang manuell geführter physikalischer Prozesse setzt voraus, dass physikalische Messdaten, die bei der Beobachtung des Prozesses gewonnen werden, automatisiert ausgewertet werden. Aus dem Ergebnis der Auswertung werden Ansteuersignale generiert, mit denen wiederum in den Prozess eingegriffen wird.

Ein wichtiges Beispiel für einen solchen Prozess ist das zumindest teilweise automatisierte Fahren, bei dem Messdaten aus der Beobachtung des Fahrzeugumfelds die Grundlage für die jeweils nächsten vom Fahrzeug ausgeführten Aktionen sind.

Hierbei ist es eine Herausforderung, dass die physikalisch erhobenen Messdaten meistens mit Rauschen und anderen Arten von Störungen behaftet sind. Derartige Störungen können bei der automatisierten Auswertung, wie beispielsweise bei der Klassifikation und semantischen Segmentierung mit Hilfe künstlicher neuronaler Netze, verstärkt werden und zu Falschklassifikationen führen. Daher werden die Messdaten üblicherweise vorverarbeitet. Eine unpassende Vorverarbeitung kann jedoch zu Artefakten führen und den Einfluss der Störungen noch verschlimmern.

Die WO 2019/007 632 A1 offenbart, die Vorverarbeitung von Bildern so maßzuschneidern, dass ein nachgeschaltetes, für die Erkennung bestimmter Objekte oder Merkmale ausgebildetes Auswertemodul das vorverarbeitete Bild bestmöglich im Hinblick auf diese Objekte bzw. Merkmale auswerten kann.

NI ZEHAO ET AL: "Adaptive Image Filtering Based on Convolutional Neural Network", 26. September 2018 (2018-09-26), ANNUAL INTERNATIONAL CONFERENCE ON THE THEORY AND APPLICATIONS OF CRYPTOGRAPHIC TECHNIQUES, EUROCRYPT 2018; [LECTURE NOTES IN COMPUTER SCIENCE; LECT.NOTES COMPUTER], SPRINGER, BERLIN, HEIDELBERG, PAGE(S) 369 - 379, XP047487199, ISBN: 978-3-642-17318-9 offenbart ein Faltungsneuronales Netzwerk (CNN), das in der Lage ist, Salz- und Pfefferrauschen, Gauß-Rauschen und zufälliges Rauschen basierend auf Deep-Learning-Training automatisch zu identifizieren. Danach werden Medianfilter, Mittelwertfilter und Wiener Filter verwendet, um die entsprechenden Bilder zu filtern.

### Offenbarung der Erfindung

Die Erfindung ist im beigefügten Anspruchssatz beschrieben.

Im Rahmen der Erfindung wurde ein Verfahren zum Trainieren eines trainierbaren Moduls entwickelt. Dieses Modul dient dem Aufbereiten von mit einer Störung behafteten Aufnahmen eines Messsignals.

Dabei umfasst der Begriff "Störung" neben statistischen Störungen, wie Schwankungen oder Rauschen, auch systematische Fehler, wie etwa ein Weichzeichnen eines Bildes auf Grund von Defokus-Unschärfe oder Bewegungs-Unschärfe.

Das Messsignal wird durch einen physikalischen Messprozess, und/oder durch eine teilweise oder vollständige Simulation eines solchen Messprozesses, und/oder durch eine teilweise oder vollständige Simulation eines mit einem solchen Messprozess beobachtbaren technischen Systems, erhalten. Dies bringt es mit sich, dass technisch hergestellte Aufnahmen des Messsignals, im Gegensatz zu rein synthetischen Daten, mit Störungen behaftet sind.

Unter einem trainierbaren Modul wird insbesondere ein Modul angesehen, das eine mit anpassbaren Parametern parametrierte Funktion mit großer Kraft zur Verallgemeinerung verkörpert. Die Parameter können beim Training eines trainierbaren Moduls insbesondere dergestalt angepasst werden, dass bei Eingabe von Lern-Eingangsgrößenwerten in das Modul die zugehörigen Lern-Ausgangsgrößenwerte möglichst gut reproduziert werden. Das trainierbare Modul kann insbesondere ein künstliches neuronales Netzwerk, KNN, wie z.B. ein faltendes neuronales Netzwerk (Englisch: convolutional neural network), beinhalten, und/oder es kann ein KNN sein.

Bei diesem Verfahren wird ein trainierbares Modul bereitgestellt, das dazu ausgebildet ist, im trainierten Zustand zu einer Aufnahme des Messsignals aus einem vorgegebenen Katalog von Entstörungsmodulen eine Kombination von Entstörungsmodulen auszuwählen, deren Anwendung auf die Aufnahme eine Unterdrückung der in der Aufnahme enthaltenen Störung voraussichtlich verbessert. Das trainierbare Modul erhält also die Aufnahme des Messsignals als Eingabe und liefert die Auswahl als Ausgabe.

Die Aufnahme des Messsignals kann insbesondere beispielsweise ein Bild, welches eine räumliche Verteilung mindestens einer physikalischen Messgröße repräsentiert, und/oder eine Zeitreihe, welche einen Zeitverlauf mindestens einer physikalischen Messgröße repräsentiert, beinhalten.

Die Auswahl kann beispielsweise zu jedem verfügbaren Entstörungsmodul angeben, ob, und ggfs. zu welchem Grade, dieses Entstörungsmodul auf die Aufnahme des Messsignals wirken sollte, um die darin enthaltene Störung zu unterdrücken. Beispielsweise kann die Auswahl für jedes Entstörungsmodul eine zahlenmäßige Bewertung angeben, in welchem Maße die Anwendung des jeweiligen Entstörungsmoduls für sinnvoll erachtet wird. Diese zahlenmäßige Bewertung kann dann noch verfeinert werden, indem beispielsweise nur das Entstörungsmodul mit der besten Bewertung ausgewählt wird und alle weiteren Entstörungsmodule unberücksichtigt bleiben.

Zu mindestens einer Lern-Aufnahme des Messsignals wird mit dem trainierbaren Modul eine Kombination von Entstörungsmodulen ausgewählt. Die ausgewählte Kombination wird auf die Lern-Aufnahme angewendet, um ein Entstörungsergebnis zu erhalten. Mit einer vorgegebenen Kostenfunktion wird eine Bewertung ermittelt, inwieweit die Störung in dem Entstörungsergebnis unterdrückt ist.

Im Rahmen des Trainings wird ein Parametersatz optimiert. Dieser Parametersatz charakterisiert mindestens das Verhalten des trainierbaren Moduls. Die Optimierung ist darauf gerichtet, bei erneuter Verarbeitung der gleichen Lern-Aufnahme, und/oder weiterer Lern-Aufnahmen, die Bewertung des dann erhaltenen Entstörungsergebnisses durch die Kostenfunktion zu verbessern.

Es wurde erkannt, dass auf diese Weise die Aufbereitung des Messsignals adaptiv an die jeweils vorliegenden Störungen angepasst werden kann, auch wenn diese im zeitlichen Verlauf schwanken. Verschiedene Störungen können auf ganz unterschiedlichen physikalischen Mechanismen beruhen, so dass auch unterschiedliche Gegenmaßnahmen angezeigt sind, um sie zu unterdrücken. So kann beispielsweise der Einfluss von Rauschen durch Weichzeichnen zumindest teilweise behoben werden, während der Einfluss von Defokus-Unschärfe oder Bewegungs-Unschärfe durch Weichzeichnen noch verschlimmert wird. Weiterhin kann durch die adaptive Auswahl beispielsweise vermieden werden, dass Entstörungsmodule dann wirken, wenn dies nicht wirklich notwendig ist. So kann beispielsweise eine Filterung eines Bildes im Ortsfrequenzraum mittels der Fourier-Analyse oder Wavelet-Analyse ein verrauschtes Bild größtenteils von dem Rauschen befreien, während die gleiche Filterung bei einem unverrauschten Bild lediglich zu einem Verlust von Details führt. Liegt eine Störung nun beispielsweise nur zeitweise vor, etwa wenn ein Fahrzeug bei der Aufnahme von Bildern einen schlecht ausgeleuchteten Bereich durchfährt, so wirken die entsprechenden Entstörungsmodule nur auf Bilder, die in dieser Zeit aufgenommen wurden.

Schließlich ermöglicht die Verwendung des trainierbaren Moduls zur Auswahl anzuwendender Entstörungsmodule im Vergleich zur direkten Nutzung des trainierbaren Moduls als Entstörungsmodul eine größere Freiheit und auch Transparenz bezüglich der Entstörungsmethoden, die auf die Aufnahme angewendet werden können.

Wenn ein trainierbares Modul beispielsweise ein KNN mit einer vorgegebenen Struktur enthält, dessen Verhalten durch einen Parametersatz charakterisiert ist, dann ist es nur schwer zu überblicken, für bei welche Werten der Parameter eine konkret gewünschte Entstörungsmethode, wie etwa eine bestimmte Filterung, durch das KNN in Betracht gezogen wird. Indem der eigentliche Prozess der Entstörung von der Auswahl entkoppelt ist, ist der Katalog an in Betracht zu ziehenden Entstörungsmethoden konkret vorgebbar.

Weiterhin verhindert es diese Entkopplung, dass stark nichtlineare oder nicht einmal differenzierbare Übertragungsfunktionen in Entstörungsmodulen unmittelbar auf die letztendliche Abhängigkeit der Kostenfunktion von den Parametern, die das Verhalten des trainierbaren Moduls charakterisieren, durchschlagen. Die Kostenfunktion, ausgedrückt als Funktion dieser Parameter, ist dann "gutartiger", so dass beispielsweise eine Optimierung der Parameter mit einem Gradientenabstiegsverfahren besser konvergiert.

Jedes Entstörungsmodul kann somit die als Eingabe erhaltene Aufnahme des Messsignals mit einer beliebigen Übertragungsfunktion in ein Entstörungsergebnis übersetzen und dieses als Ausgabe liefern.

Hier kann es beispielsweise Übertragungsfunktionen geben, die nur von der als Eingabe erhaltenen Aufnahme abhängen, wie beispielsweise das Abziehen des Mittelwerts von allen in der Aufnahme enthaltenen Zahlenwerten (etwa Intensitätswerten von Bildpixeln), eine Filterung mit einer fest vorgegebenen Filtercharakteristik oder auch die unveränderte Kopie der Aufnahme in das Entstörungsergebnis. Das letztgenannte "Dummy-Entstörungsmodul" kann beispielsweise vorteilhaft in dem vorgegebenen Katalog enthalten sein, damit das trainierbare Modul in einem rekursiv geführten Entstörungsprozess durch Auswahl gerade dieses Entstörungsmoduls signalisieren kann, dass der Prozess gegen ein Endergebnis konvergiert ist.

Es kann jedoch auch beispielsweise Übertragungsfunktionen geben, die freie Parameter aufweisen. Statt vieler Filterungen mit jeweils fest vorgegebenen Filtercharakteristiken kann dann beispielsweise nur noch eine Filterung im vorgegebenen Katalog hinterlegt sein, wobei die Filtercharakteristik über die noch freien Parameter eingestellt wird. Das Entstörungsmodul kann beispielsweise auch als Autoencoder-Netzwerk ausgebildet sein, das die eingegebene Aufnahme zunächst in einen Zwischenzustand mit niedriger Dimensionalität übersetzt und anschließend aus diesem Zwischenzustand wieder rekonstruiert. Ein solches Autoencoder-Netzwerk hat sehr viele freie Parameter, die es zu trainieren gilt.

Daher charakterisiert der Parametersatz, der im Hinblick auf eine Verbesserung der Bewertung durch die Kostenfunktion optimiert wird, in einer besonders vorteilhaften Ausgestaltung zusätzlich das Verhalten mindestens eines Entstörungsmoduls. Es können dann beispielsweise die Auswahl eines Entstörungsmoduls und gleichzeitig auch das Entstörungsmodul selbst gemeinsam trainiert werden.

Über die Kostenfunktion kann dem Trainingsprozess jede Art von Vorwissen ("ground truth"), das bezüglich der Lern-Aufnahme verfügbar ist, zugeführt werden. Anhand einer hinreichenden Zahl von Lern-Aufnahmen kann das trainierbare Modul dann lernen, beliebige Aufnahmen dahingehend auszuwerten, mit welchen Arten von Störungen diese Aufnahmen behaftet sind und mit welchen Maßnahmen diese Störungen unterdrückt werden können. Das trainierbare Modul kann dann eine Funktion erfüllen, die vergleichbar ist mit der eines menschlichen Experten für Bildbearbeitung. Wenn man einem solchen Experten ein Foto vorlegt, erkennt er unmittelbar, welche Probleme die Qualität des Fotos beeinträchtigen. Er kann dann in der Bildbearbeitungssoftware zielsicher zu den Werkzeugen greifen, die diese Probleme beheben.

Beispielsweise kann die Kostenfunktion vom Ergebnis eines Vergleichs zwischen dem Entstörungsergebnis und einem bekannten Lern-Entstörungsergebnis abhängen. Lern-Daten für das trainierbare Modul können beispielsweise erhalten werden, indem ungestörte Aufnahmen eines Messsignals, wie beispielsweise Bilder, mit Störungen einer definierten Art und Stärke beaufschlagt werden. Die mit Störungen beaufschlagte Aufnahme ist dann die Lern-Aufnahme, für deren Entstörung das trainierbare Modul ein oder mehrere passende Entstörungsmodule auswählen soll. Der ungestörte Urzustand der Aufnahme ist das Lern-Entstörungsergebnis, das bei Anwendung der ausgewählten Entstörungsmodule auf die Lern-Aufnahme idealerweise reproduziert werden sollte.

Alternativ oder in Kombination hierzu kann die Kostenfunktion beispielsweise von einer automatisierten Bewertung des Entstörungsergebnisses anhand mindestens eines vorgegebenen Kriteriums abhängen. Beispielsweise kann die Stärke von Rauschen in einem Bild anhand statistischer Kriterien, etwa anhand eines Histogramms von Intensitätswerten und/oder anhand der Standardabweichung, ermittelt werden. Hierfür ist es nicht notwendig, eine ungestörte Version der Aufnahme zu haben.

Alternativ oder in Kombination hierzu kann die Kostenfunktion beispielsweise von einer von mindestens einem externen Bewerter erhaltenen Bewertung des Entstörungsergebnisses abhängen. Auf diese Weise kann das Wissen des Experten in Bezug auf die Qualität entstörter Aufnahmen konserviert und in eine maschinell nutzbare Form überführt werden. Bislang ließ sich diese Art von Wissen nur schwer verschriftlichen.

In einer weiteren vorteilhaften Ausgestaltung wird das Entstörungsergebnis durch ein vorgegebenes Verarbeitungsmodul zu einem Arbeitsergebnis verarbeitet. Die Kostenfunktion hängt dann vom Ergebnis eines Vergleichs zwischen dem Arbeitsergebnis und einem bekannten Lern-Arbeitsergebnis ab. Das Verarbeitungsmodul kann beispielsweise als Klassifikator und/oder Regressor ausgebildet sein, der eine Klassifikation und/oder Regression des Entstörungsergebnisses als Arbeitsergebnis liefert.

In dem genannten Beispiel, in dem eine zunächst ungestörte Aufnahme mit Störungen einer definierten Art und Stärke beaufschlagt wird, kann beispielsweise die ungestörte Aufnahme dem Verarbeitungsmodul zugeführt werden, um das Lern-Arbeitsergebnis zu erhalten. Wenn die gestörte Aufnahme durch das oder die vom trainierbaren Modul ausgewählten Entstörungsmodule entstört wurde und das so erhaltene Entstörungsergebnis ebenfalls dem Verarbeitungsmodul zugeführt wird, dann sollte das Verarbeitungsmodul ein Ergebnis liefern, das so nahe wie möglich an besagtem Lern-Arbeitsergebnis liegt.

In einer besonders vorteilhaften Ausgestaltung wird ein trainierbares Modul gewählt, das ein künstliches neuronales Netzwerk enthält. In einem solchen Netzwerk lässt sich die Aufgabe, zu einer gegebenen Aufnahme des Messsignals das oder die passenden Entstörungsmodule auszuwählen, besonders einfach in zwei Teilaufgaben zerlegen. In einem ersten Schritt kann die in der Aufnahme enthaltene Störung näher charakterisiert werden, und in einem zweiten Schritt kann auf der Basis dieser Erkenntnis die Auswahl des oder der Entstörungsmodule getroffen werden.

Das Charakterisieren der Störung kann beispielsweise mit einer ersten Abfolge von Faltungsschichten vorgenommen werden, die die Dimensionalität der Aufnahme schrittweise reduzieren. Beispielsweise kann diese Abfolge zwischen 2 und 7 Faltungsschichten enthalten, wobei zwischen den Faltungsschichten optional auch noch eine oder mehrere Pooling-Schichten angeordnet sein können.

Die Auswahl des oder der Entstörungsmodule kann beispielsweise mit einer zweiten Abfolge von vollvernetzten Schichten getroffen werden. Beispielsweise kann diese Abfolge zwischen 2 und 4 vollvernetzte Schichten umfassen.

In einer weiteren besonders vorteilhaften Ausgestaltung wird ein von mindestens einer der Faltungsschichten als Ausgabe geliefertes Zwischenergebnis mit einer Vortrainings-Kostenfunktion bewertet. Parameter, die das Verhalten der ersten Abfolge der Faltungsschichten charakterisieren, werden vorab optimiert mit dem Ziel, den Wert dieser Vortrainings-Kostenfunktion zu verbessern. Das

Zwischenergebnis kann beispielsweise der vorletzten Faltungsschicht entnommen werden, d.h., der Faltungsschicht, die zu der unmittelbar an die erste vollvernetzte Schicht angrenzenden Faltungsschicht benachbart ist. Für die beispielhafte Anwendung des Entstörens von Bildern kann das Zwischenergebnis beispielsweise etwa 500 Zahlenwerte umfassen. Diese Art von Vortraining hebt im Wesentlichen nur auf die Störung selbst ab und ignoriert den semantischen Inhalt des Bildes weitestgehend. Damit wird eine Tendenz des nachfolgenden Trainings des kompletten Parametersatzes, die erkannten Störungen immer auch an einen semantischen Inhalt der Aufnahme des Messsignals zu koppeln, unterdrückt.

Die Vortrainings-Kostenfunktion kann insbesondere vom Ergebnis eines Vergleichs zwischen dem Zwischenergebnis und einer bekannten Zusatzinformation über die Störung abhängen. In dem genannten Beispiel, in dem eine zunächst ungestörte Aufnahme mit einer definierten Störung beaufschlagt wird, kann also beispielsweise bewertet werden, ob diese Störung korrekt erkannt wird.

Die Erfindung bezieht sich auch auf ein weiteres Verfahren zum Aufbereiten von mit einer Störung behafteten Aufnahmen eines Messsignals.

Im Rahmen dieses Verfahrens wird zunächst mindestens ein mit dem zuvor beschriebenen Verfahren trainiertes trainierbares Modul bereitgestellt. Das Bereitstellen kann beispielsweise beinhalten, das trainierbare Modul wie zuvor beschrieben zu trainieren. Das trainierbare Modul kann aber auch aus einer beliebigen Quelle im bereits fertig trainierten Zustand bezogen werden.

Mindestens eine Aufnahme des Messsignals wird dem trainierbaren Modul zugeführt, so dass das trainierbare Modul aus dem vorgegebenen Katalog von Entstörungsmodulen eine Kombination von Entstörungsmodulen auswählt. Die ausgewählte Kombination wird auf die Aufnahme angewendet, so dass ein Entstörungsergebnis erhalten wird. Das Verfahren bezieht sich somit auf den Wirkbetrieb (Inferenz) des trainierbaren Moduls im trainierten Zustand für die Zwecke einer Nutzanwendung.

Wie zuvor erläutert, hat das zuvor beschriebene Training in diesem Zusammenhang die Wirkung, dass auf jede Aufnahme genau diejenigen Entstörungsmodule angewendet werden, die für die Unterdrückung der in dieser Aufnahme vorliegenden konkreten Störungen wirklich nötig sind.

Vorteilhaft wird das Entstörungsergebnis durch ein vorgegebenes Verarbeitungsmodul zu einem Arbeitsergebnis weiterverarbeitet. Wie zuvor beschrieben, hat in diesem Zusammenhang das verbesserte Entstören der Aufnahme die Wirkung, dass mit einer höheren Wahrscheinlichkeit das im Kontext der jeweiligen Anwendung korrekte Arbeitsergebnis erhalten wird. Dies gilt insbesondere, wenn das Verarbeitungsmodul als Klassifikator und/oder Regressor ausgebildet ist, der eine Klassifikation und/oder Regression des Entstörungsergebnisses als Arbeitsergebnis liefert.

In einer weiteren besonders vorteilhaften Ausgestaltung wird aus dem Entstörungsergebnis, und/oder aus dem Arbeitsergebnis, ein Ansteuersignal generiert. Mit diesem Ansteuersignal wird ein Fahrzeug, und/oder ein Klassifikationssystem, und/oder ein System zur Qualitätskontrolle von in Serie gefertigten Produkten, und/oder ein System zur medizinischen Bildgebung, angesteuert. Die verbesserte Qualität des Entstörungsergebnisses, bzw. des Arbeitsergebnisses, bewirkt in diesem Kontext, dass das jeweilige technische System mit einer höheren Wahrscheinlichkeit die aus Sicht der jeweiligen Anwendung optimale Aktion ausführt. Werden beispielsweise im Rahmen der Objekterkennung für das zumindest teilweise automatisierte Fahren Verkehrszeichen oder andere Verkehrsteilnehmer mit einer höheren Genauigkeit semantisch klassifiziert, so fährt das auf der Basis dieser Objekterkennung angesteuerte Fahrzeug mit einer höheren Wahrscheinlichkeit so, wie man es im Lichte der Verkehrssituation von ihm erwartet.

Sowohl beim Training als auch im Wirkbetrieb kann das trainierbare Modul beispielsweise eine Gewichtung, mit der die von verschiedenen Entstörungsmodulen gelieferten Entstörungsergebnisse zusammenzuführen sind, als Auswahl einer Kombination von Entstörungsmodulen liefern. Darin spiegelt sich die Erkenntnis wider, dass viele Störungen komplex sind und sich nicht mit einer einfachen Einzelmaßnahme beheben lassen. Dies gilt insbesondere dann, wenn der vorgegebene Katalog von Entstörungsmodulen sehr fein granular ist, also jedes einzelne Entstörungsmodul vergleichsweise einfach aufgebaut ist. Ein in dieser Weise granularer Aufbau des Katalogs bietet zum einen eine höhere Flexibilität für die Behandlung einer größeren Klasse möglicher Störungen. Zum anderen wird auch die Implementierung, beispielsweise in Form von Software, erleichtert. Mehrere kleine Module unabhängig voneinander zu testen kann wesentlich einfacher sein als ein monolithisches Modul zu testen, das die Funktionalitäten dieser kleinen Module vereint.

Es können aber auch dann mehrere Entstörungsmodule auf die Aufnahme des Messsignals angewendet werden, wenn das trainierbare Modul immer nur eines zur Anwendung auswählt. Zu diesem Zweck kann das Entstörungsergebnis dem trainierbaren Modul erneut als mit einer Störung behaftete Aufnahme des Messsignals zugeführt werden. Das heißt, das Entstören kann rekursiv geführt werden, wobei immer ein Aspekt zur Zeit abgearbeitet wird. Diese Rekursion kann beispielsweise solange wiederholt werden, bis das Entstörungsergebnis nach Maßgabe eines vorgegebenen Kriteriums konvergiert.

Wie zuvor erläutert, kann das trainierbare Modul das Konvergieren beispielsweise dadurch anzeigen, dass es das "Dummy-Entstörungsmodul" vorschlägt, welches seine Eingabe identisch auf seine Ausgabe kopiert. Der Anlass hierfür kann beispielsweise sein, dass das Entstörungsergebnis ein Pareto-Optimum erreicht hat. Es ist dann nicht mehr möglich, einen Aspekt des Entstörungsergebnisses zu verbessern, ohne einen anderen Aspekt wieder zu verschlechtern.

In einer weiteren besonders vorteilhaften Ausgestaltung sowohl des Trainings als auch des Wirkbetriebs enthält mindestens ein Entstörungsmodul mehrere Submodule sowie ein weiteres trainierbares Modul. Das weitere trainierbare Modul steuert, inwieweit die Wirkung dieses Entstörungsmoduls aus den Wirkungen eines oder mehrerer Submodule zusammengesetzt wird. Dieses Zusammensetzen kann beispielsweise durch die zuvor erläuterte Gewichtung oder durch die zuvor erläuterte Rekursion erfolgen.

Anordnungen aus einem trainierbaren Modul und mehreren Entstörungsmodulen, die dieses trainierbare Modul für die Auswahl "an der Hand hat", lassen sich somit schachteln. Eine mögliche Nutzanwendung einer solchen Schachtelung besteht darin, eine bereits bestehende Anordnung, in der das trainierbare Modul bereits fertig trainiert ist, um weitere Entstörungsmodule zu erweitern. Das bereits absolvierte Training muss dann nicht verworfen werden, sondern kann in vollem Umfang weiter genutzt werden. Um mit dem weiteren trainierbaren Modul die weiteren Entstörungsmodule einzubinden, ist nur ein deutlich weniger aufwändiges Training dieses weiteren trainierbaren Moduls nötig.

Wenn die bereits bestehende Anordnung beispielsweise 50 Entstörungsmodule umfasst und um drei weitere Entstörungsmodule erweitert werden soll, ist es nicht erforderlich, das Training mit nun insgesamt 53 Entstörungsmodulen völlig von vorn zu beginnen. Das neu hinzukommende trainierbare Modul hat nun die Wahl, die bisherige Anordnung der 50 Entstörungsmodule als Ganzes auszuwählen oder eines der drei neu hinzukommenden Entstörungsmodule auszuwählen. Diese Auswahl zwischen lediglich vier Modulen ist deutlich einfacher zu trainieren als eine Auswahl zwischen 53 Modulen. Wenn die bereits bestehende Anordnung ausgewählt wird, wird innerhalb dieser Anordnung durch das ursprüngliche, bereits fertig trainierte trainierbare Modul entschieden, inwieweit welche der ursprünglichen 50 Entstörungsmodule zum Einsatz kommen.

Die Erfindung bezieht sich auch auf einen Parametersatz mit Parametern, die das Verhalten eines trainierbaren Moduls charakterisieren und mit dem zuvor beschriebenen Trainingsverfahren erhalten wurden. Diese Parameter können beispielsweise Gewichte sein, mit denen Eingaben von Neuronen oder sonstigen Recheneinheiten in einem KNN zu Aktivierungen dieser Neuronen bzw. Recheneinheiten verrechnet werden. Dieser Parametersatz verkörpert den Aufwand, der in das Training investiert wurde, und ist insofern ein eigenständiges Produkt. Das heißt, wer in einer vergleichbaren Situation diesen Parametersatz zur Verfügung hat, muss den Aufwand für das Training nicht erneut aufbringen.

Die Erfindung bezieht sich nach dem zuvor Erläuterten auch auf eine Vorrichtung zur Durchführung eines der zuvor beschriebenen Verfahren. Diese Vorrichtung umfasst eine Mehrzahl von Entstörungsmodulen, die jeweils eine Aufnahme eines Messsignals als Eingabe erhalten und dazu ausgebildet sind, zumindest teilweise um die Auswirkung spezifischer Störungen bereinigte Versionen der Aufnahme auszugeben. Die Vorrichtung umfasst weiterhin mindestens ein trainierbares Modul, welches ebenfalls die Aufnahme des Messsignals als Eingabe erhält und steuert, inwieweit sich das von der Vorrichtung insgesamt gelieferte Entstörungsergebnis aus den von den einzelnen Entstörungsmodulen gelieferten Versionen zusammensetzt.

Die Vorrichtung kann insbesondere weiterhin ein Verarbeitungsmodul umfassen, welches dazu ausgebildet ist, das Entstörungsergebnis zu einem Arbeitsergebnis weiterzuverarbeiten. Dieses Verarbeitungsmodul kann insbesondere als Klassifikator und/oder Regressor ausgebildet sein.

Die Verfahren können ganz oder teilweise computerimplementiert sein, beispielsweise in Form einer Software. Daher bezieht sich die Erfindung auch auf ein Computerprogramm mit maschinenlesbaren Anweisungen, die, wenn sie auf einem oder mehreren Computern ausgeführt werden, den oder die Computer dazu veranlassen, eines der beschriebenen Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin kann ein Computer mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 zum Trainieren des trainierbaren Moduls 3;
Figur 2 Ausführungsbeispiel des Verfahrens 200 zum Aufbereiten von Aufnahmen 11 eines Messsignals 10;
Figur 3 Ausführungsbeispiel einer Vorrichtung 1;
Figur 4 Detailansicht eines trainierbaren Moduls 3 mit neuronalem Netzwerk 30;
Figur 5 Beispielhafte Beseitigung von Gaußschem Rauschen (Figur 5a) und Schrotrauschen (Figur 5b).

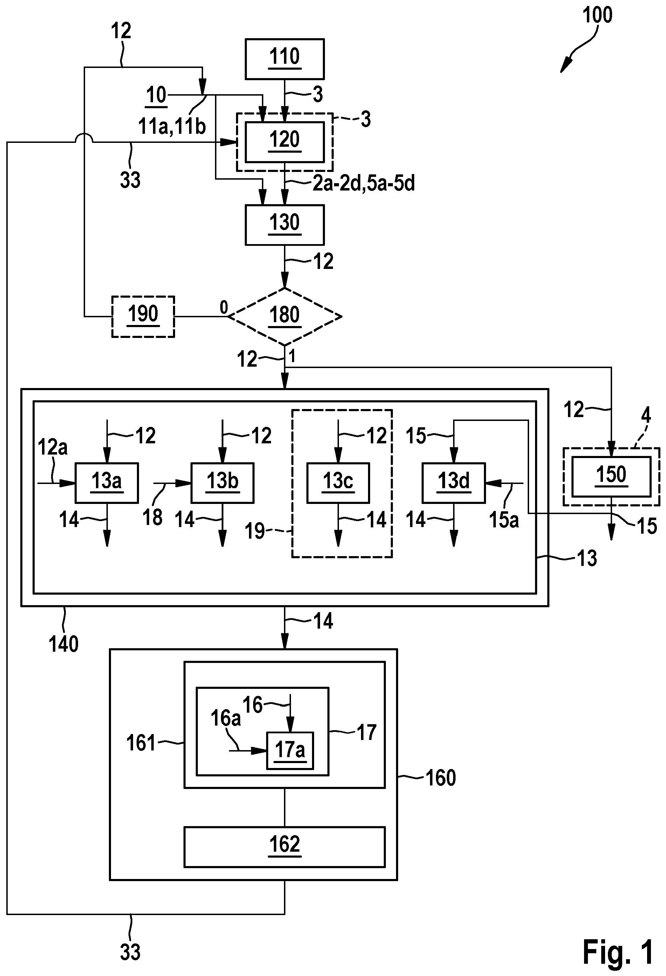

Figur 1 ist ein Ablaufdiagramm eines Ausführungsbeispiels des Verfahrens 100. In Schritt 110 wird ein trainierbares Modul 3 bereitgestellt. In Schritt 120 werden diesem trainierbaren Modul 3 Lern-Aufnahmen 11a eines Messsignals 10 zugeführt. Diese Lern-Aufnahmen 11a sind mit Störungen 11b behaftet. Das trainierbare Modul 3 wählt zu jeder Lern-Aufnahme 11a aus einem vorgegebenen Katalog 2 von Entstörungsmodulen 2a-2d diejenigen Entstörungsmodule 2a-2d aus, die aus seiner Sicht am besten geeignet sind, um die Störung 11b aus der Lern-Aufnahme 11a zu entfernen. Erfindungsgemäß werden den ausgewählten Entstörungsmodule 2a-2d Gewichtungen 5a-5d zugeordnet, mit denen sie wirken sollen.

In Schritt 130 werden das oder die jeweils ausgewählten Entstörungsmodule 2a-2b auf die Lern-Aufnahmen 11a angewendet. Es entsteht ein Entstörungsergebnis 12.

Optional wird in Schritt 180 geprüft, ob das Entstörungsergebnis 12 nach Maßgabe eines vorgegebenen Kriteriums konvergiert ist. Ist dies nicht der Fall (Wahrheitswert 0), so wird das Entstörungsergebnis 12 in Schritt 190 dem trainierbaren Modul 3 erneut als mit einer Störung 11b behaftete Aufnahme 11a des Messsignals 10 zugeführt. Ist das Entstörungsergebnis 12 hingegen konvergiert (Wahrheitswert 1), ist es endgültig und wird weiter ausgewertet.

In Schritt 140 wird mit Hilfe einer Kostenfunktion 13 eine Bewertung 14 des Entstörungsergebnisses 12 ermittelt. In Schritt 150 wird das Entstörungsergebnis 12 durch ein Verarbeitungsmodul 4 zu einem Arbeitsergebnis 15 verarbeitet.

Beispielhafte Komponenten der Kostenfunktion 13 sind innerhalb des Kastens 13 näher aufgeschlüsselt. Gemäß Block 13a kann das Entstörungsergebnis 12 mit einem bekannten Lern-Entstörungsergebnis 12a verglichen werden. Gemäß Block 13b kann das Entstörungsergebnis 12 anhand eines vorgegebenen Kriteriums 18 automatisiert bewertet werden. Gemäß Block 13c kann eine von mindestens einem externen Bewerter 19, etwa von einem Experten oder über Crowdsourcing, erhaltene Bewertung des Entstörungsergebnisses 12 herangezogen werden. Gemäß Block 13d kann das in Schritt 150 gebildete Arbeitsergebnis 15, etwa eine Klassifikation, mit einem bekannten Lern-Arbeitsergebnis 15a verglichen werden.

Die mit der Kostenfunktion 13 ermittelte Bewertung 14 wird in Schritt 160 herangezogen, um den Parametersatz 33, der mindestens das Verhalten des trainierbaren Moduls 3 charakterisiert, zu optimieren. Hierbei kann gemäß Block 161 beispielsweise ein dem trainierbaren Modul 3 entnommenes Zwischenergebnis 16, das die Störung 11b charakterisiert, mit einer Vortrainings-Kostenfunktion 17 bewertet werden, und ein Teil der Parameter 33 kann gemäß Block 162 vorab optimiert werden mit dem Ziel, den Wert dieser Vortrainings-Kostenfunktion 17 zu verbessern. Die Vortrainings-Kostenfunktion 17 kann beispielsweise gemäß Block 17a einen Vergleich zwischen dem Zwischenergebnis 16 und einer bekannten Zusatzinformation 16a über die Störung 11b enthalten.

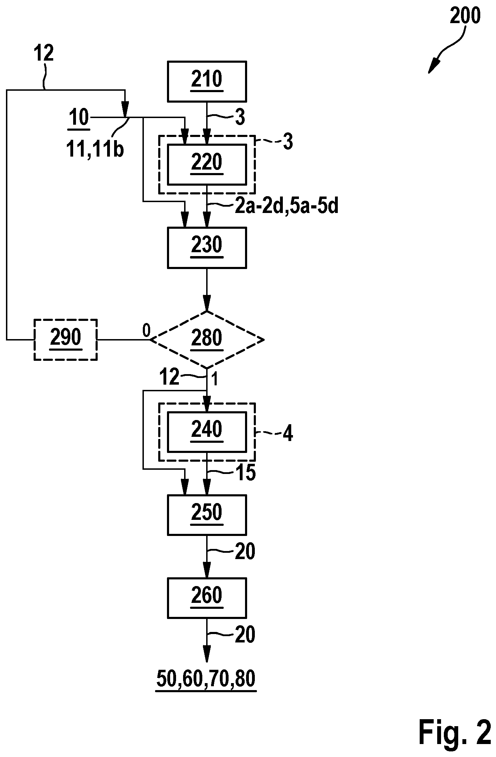

Figur 2 ist ein Ablaufdiagramm eines Ausführungsbeispiels des Verfahrens 200 zum Aufbereiten von Aufnahmen 11. In Schritt 210 wird ein mit dem zuvor beschriebenen Verfahren 100 trainiertes trainierbares Modul 3 bereitgestellt, wobei das trainierbare Modul 3 aus diesem Anlass erst trainiert werden kann, aber auch schon im fertig trainierten Zustand aus einer beliebigen Quelle bezogen werden kann.

In Schritt 220 wird mindestens eine Aufnahme 11 des Messsignals 10 dem trainierbaren Modul 3 zugeführt, so dass dieses ein oder mehrere Entstörungsmodule 2a-2d für die Anwendung auf die Aufnahme 11 ausgewählt, mit Gewichtungen 5a-5d. Die solchermaßen ausgewählten Entstörungsmodule 12a-12d werden in Schritt 230 auf die Aufnahme 11 angewendet.

Optional wird in Schritt 280 geprüft, ob das Entstörungsergebnis 12 nach Maßgabe eines vorgegebenen Kriteriums konvergiert ist. Ist dies nicht der Fall (Wahrheitswert 0), so wird das Entstörungsergebnis 12 in Schritt 290 dem trainierbaren Modul 3 erneut als mit einer Störung 11b behaftete Aufnahme 11 des Messsignals 10 zugeführt. Ist das Entstörungsergebnis 12 hingegen konvergiert (Wahrheitswert 1), ist es endgültig und wird weiter ausgewertet.

In Schritt 240 wird das Entstörungsergebnis 12 durch ein vorgegebenes Verarbeitungsmodul 4, etwa einen Klassifikator, zu einem Arbeitsergebnis 15 weiterverarbeitet.

Aus dem Entstörungsergebnis 12, und/oder aus dem Arbeitsergebnis 15, wird in Schritt 250 ein Ansteuersignal 20 gebildet. In Schritt 260 wird hiermit ein Fahrzeug 50, und/oder ein Klassifikationssystem 60, und/oder ein System 70 zur Qualitätskontrolle von in Serie gefertigten Produkten, und/oder ein System 80 zur medizinischen Bildgebung, angesteuert.

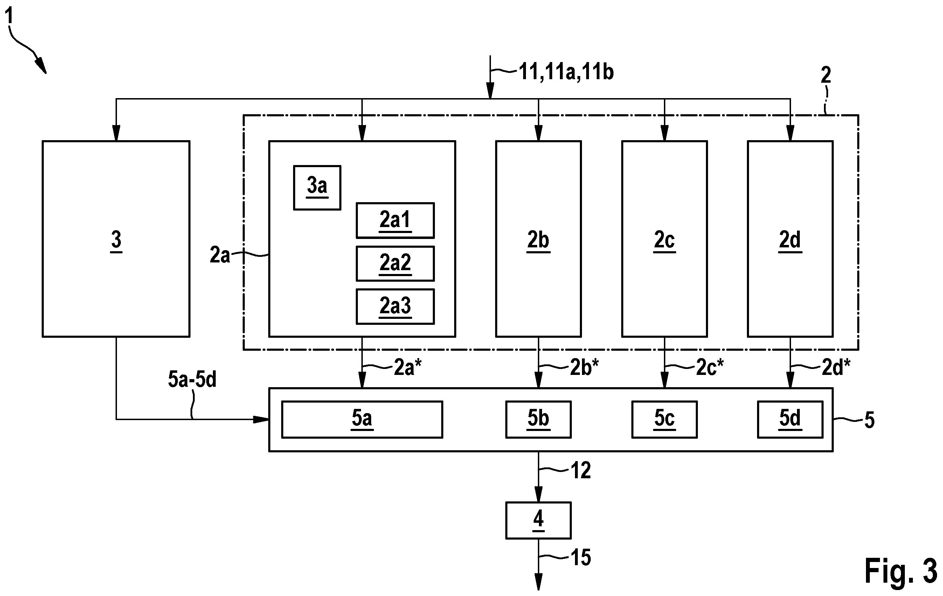

Figur 3 zeigt ein beispielhaftes Ausführungsbeispiel einer Vorrichtung 1 zur Durchführung der zuvor beschriebenen Verfahren 100, 200. Der Katalog 2 von Entstörungsmodulen umfasst hier vier Entstörungsmodule 2a-2d, die aus der mit der Störung 11b behafteten Aufnahme 11, 11a jeweils Versionen 2a*-2d* erzeugen. Das trainierbare Modul 3 erhält ebenfalls die Aufnahme 11, 11a als Eingabe und ermittelt Gewichtungen 5a-5d, mit denen die Versionen 2a*-2d* durch eine Gewichtungseinheit 5 zu einem Entstörungsergebnis 12 verrechnet werden. Weiterhin ist ein Verarbeitungsmodul 4 vorgesehen, um das Entstörungsergebnis 12 zu einem Arbeitsergebnis 15 weiterzuverarbeiten.

Das erste Entstörungsmodul 2a enthält Submodule 2a1-2a3 sowie ein weiteres trainierbares Modul 3, das darüber entscheidet, wie die Submodule 2a1-2a3 jeweils auf die vom Entstörungsmodul 2a als Ganzes gelieferte Version wirken. Dies kann, analog zum Zusammenwirken der Entstörungsmodule 2a-2d, beispielsweise mit einer weiteren Gewichtungseinheit 5 erfolgen.

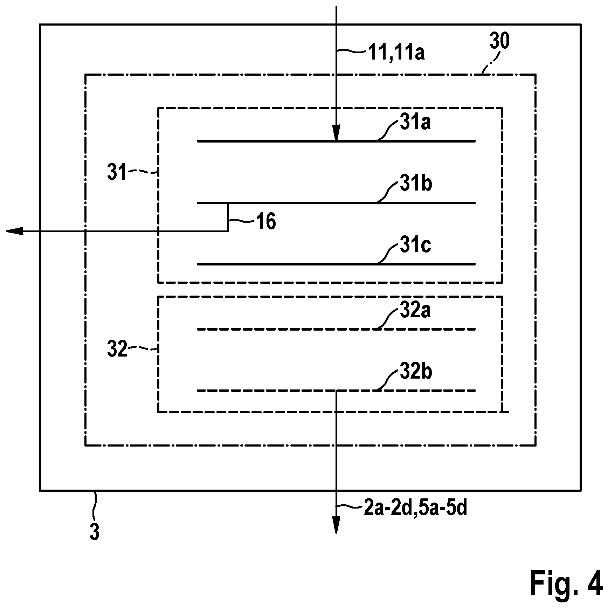

Figur 4 zeigt eine Detailansicht des trainierbaren Moduls 3, das hier ein neuronales Netzwerk 30 enthält. Das neuronale Netzwerk 30 enthält eine erste Abfolge 31 dreier Faltungsschichten 31a-31c, die die Aufnahme 11, 11a als Eingabe erhält und hauptsächlich die in der Aufnahme 11, 11a enthaltene Störung 11b charakterisiert. Hieran grenzt eine zweite Abfolge 32 zweier vollvernetzter Schichten 32a, 32b an, die die Auswahl von Entstörungsmodulen 2a-2d, mit Gewichtungen 5a-5d, ermittelt. Aus der vorletzten Faltungsschicht 31b wird das Zwischenergebnis 16 für die Nutzung in der Vortrainings-Kostenfunktion 17 abgegriffen.

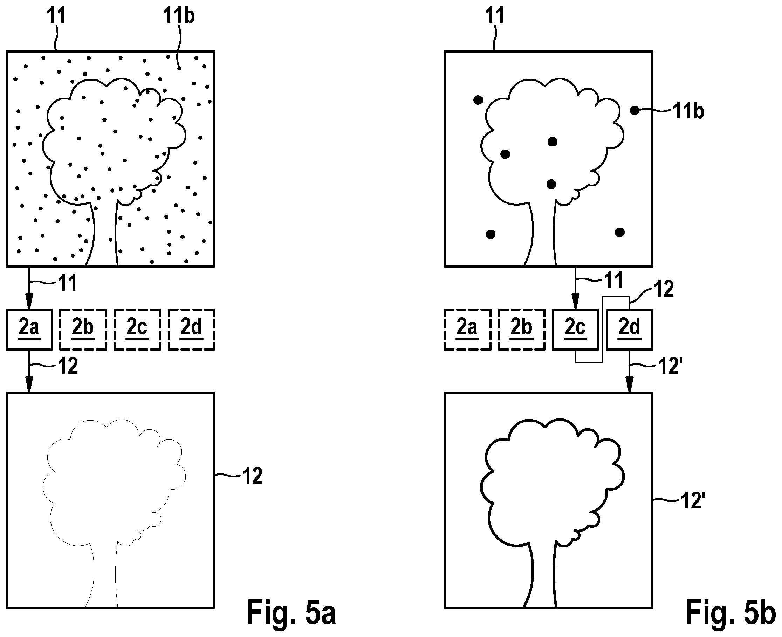

Figur 5 zeigt schematisch, wie verschiedene Störungen 11b in Aufnahmen 11 durch die Anwendung unterschiedlicher Entstörungsmodule 2a-2d behoben werden können.

Figur 5a zeigt ein erstes Beispiel, in dem die Aufnahme 11 Gaußsches Rauschen als Störung 11b enthält. Hier wird ein Entstörungsmodul 2a aktiviert, das die Aufnahme weichzeichnet.

Figur 5b zeigt ein zweites Beispiel, in dem die Aufnahme 11 Schrotrauschen als Störung 11b enthält. Hier wird zunächst ein erstes Entstörungsmodul 2c aktiviert, das die Aufnahme 11 "morphologisch öffnet". Anschließend wird das Ergebnis 12 im Wege der Rekursion in ein zweites Entstörungsmodul 2d geleitet und hier "morphologisch geschlossen". Beide Operationen zusammen liefern ein Endergebnis 12', das frei von dem Schrotrauschen ist und im Wesentlichen noch alle Details erhält.

## Patentansprüche

1. Computer-implementiertes Verfahren (100) zum Trainieren eines trainierbaren Moduls (3) für das Aufbereiten von mit einer Störung (11b) behafteten Aufnahmen (11) eines Messsignals (10) mit den Schritten:
• es wird ein trainierbares Modul (3) bereitgestellt (110), das dazu ausgebildet ist, im trainierten Zustand zu einer Aufnahme (11) des Messsignals (10) aus einem vorgegebenen Katalog (2) von Entstörungsmodulen (2a-2d) eine Kombination von Entstörungsmodulen (2a-2d) auszuwählen, deren Anwendung auf die Aufnahme (11) eine Unterdrückung der in der Aufnahme (11) enthaltenen Störung (11b) voraussichtlich verbessert;
• mit dem trainierbaren Modul (3) wird zu mindestens einer Lern-Aufnahme (11a) des Messsignals (10) eine Kombination von Entstörungsmodulen (2a-2d) ausgewählt (120);
• die ausgewählte Kombination, wird auf die Lern-Aufnahme (11a) angewendet (130), um ein Entstörungsergebnis (12) zu erhalten;
• mit einer vorgegebenen Kostenfunktion (13) wird eine Bewertung (14) ermittelt (140), inwieweit die Störung (11b) in dem Entstörungsergebnis (12) unterdrückt ist;
• ein Parametersatz (33), der mindestens das Verhalten des trainierbaren Moduls (3) charakterisiert, wird optimiert (160) mit dem Ziel, bei erneuter Verarbeitung der gleichen Lern-Aufnahme (11a), und/oder weiterer Lern-Aufnahmen (11a), die Bewertung (14) des dann erhaltenen Entstörungsergebnisses (12) durch die Kostenfunktion (13) zu verbessern;
wobei das trainierbare Modul (3) eine Gewichtung (5a-5d), mit der die von verschiedenen Entstörungsmodulen (2a-2d) gelieferten Entstörungsergebnisse (12) zusammenzuführen sind, als Auswahl einer Kombination von Entstörungsmodulen (2a-2d) liefert.

2. Verfahren (100) nach Anspruch 1, wobei der Parametersatz (33) zusätzlich das Verhalten mindestens eines Entstörungsmoduls (2a-2d) charakterisiert.

3. Verfahren (100) nach einem der Ansprüche 1 bis 2, wobei die Kostenfunktion (13) vom Ergebnis eines Vergleichs (13a) zwischen dem Entstörungsergebnis (12) und einem bekannten Lern-Entstörungsergebnis (12a), und/oder von einer automatisierten Bewertung (13b) des Entstörungsergebnisses (12) anhand mindestens eines vorgegebenen Kriteriums (18), und/oder von einer von mindestens einem externen Bewerter (19) erhaltenen Bewertung (13c) des Entstörungsergebnisses (12), abhängt.

4. Verfahren (100) nach einem der Ansprüche 1 bis 3, wobei
• das Entstörungsergebnis (12) durch ein vorgegebenes Verarbeitungsmodul (4) zu einem Arbeitsergebnis (15) verarbeitet wird (150) und
• die Kostenfunktion (13) vom Ergebnis eines Vergleichs (13d) zwischen dem Arbeitsergebnis (15) und einem bekannten Lern-Arbeitsergebnis (15a) abhängt.

5. Verfahren (100) nach Anspruch 4, wobei das Verarbeitungsmodul (4) als Klassifikator und/oder Regressor ausgebildet ist, der eine Klassifikation und/oder Regression des Entstörungsergebnisses (12) als Arbeitsergebnis (15) liefert.

6. Verfahren (100) nach einem der Ansprüche 1 bis 5, wobei ein trainierbares Modul (3) gewählt wird, das ein künstliches neuronales Netzwerk (30) enthält, wobei dieses künstliche neuronale Netzwerk (30) eine erste Abfolge (31) von zwischen 2 und 7 Faltungsschichten (31a-31c) und eine zweite Abfolge (32) von zwischen 2 und 4 vollvernetzten Schichten (32a-32b) umfasst.

7. Verfahren (100) nach Anspruch 6, wobei ein von mindestens einer der Faltungsschichten (31a-31c) als Ausgabe geliefertes Zwischenergebnis (16) mit einer Vortrainings-Kostenfunktion (17) bewertet wird (161) und wobei Parameter (33), die das Verhalten der ersten Abfolge (31) der Faltungsschichten (31a-31c) charakterisieren, vorab optimiert werden (162) mit dem Ziel, den Wert dieser Vortrainings-Kostenfunktion (17) zu verbessern.

8. Verfahren (100) nach Anspruch 7, wobei die Vortrainings-Kostenfunktion (17) vom Ergebnis eines Vergleichs (17a) zwischen dem Zwischenergebnis (16) und einer bekannten Zusatzinformation (16a) über die Störung (11b) abhängt.

9. Computer-implementiertes Verfahren (200) zum Aufbereiten von mit einer Störung (11b) behafteten Aufnahmen (11) eines Messsignals (10) mit den Schritten:
• es wird mindestens ein mit dem Verfahren (100) nach einem der Ansprüche 1 bis 8 trainiertes trainierbares Modul (3) bereitgestellt (210);
• mindestens eine Aufnahme (11) des Messsignals (10) wird dem trainierbaren Modul (3) zugeführt (220), so dass das trainierbare Modul (3) aus dem vorgegebenen Katalog (2) von Entstörungsmodulen (2a-2d) eine Kombination von Entstörungsmodulen (2a-2d) auswählt, indem es eine Gewichtung (5a-5d), mit der die von den verschiedenen Entstörungsmodulen gelieferten Entstörungsergebnisse (2a*-2d*) zusammenzuführen sind, liefert;
• die ausgewählte Kombination wird auf die Aufnahme (11) angewendet (230), so dass ein Entstörungsergebnis (12) erhalten wird.

10. Verfahren (200) nach Anspruch 9, wobei das Entstörungsergebnis (12) durch ein vorgegebenes Verarbeitungsmodul (4) zu einem Arbeitsergebnis (15) weiterverarbeitet wird (240).

11. Verfahren (200) nach Anspruch 10, wobei das Verarbeitungsmodul (4) als Klassifikator und/oder Regressor ausgebildet ist, der eine Klassifikation und/oder Regression des Entstörungsergebnisses (12) als Arbeitsergebnis (15) liefert.

12. Verfahren (200) nach einem der Ansprüche 9 bis 11, wobei aus dem Entstörungsergebnis (12), und/oder aus dem Arbeitsergebnis (15), ein Ansteuersignal (20) generiert wird (250) und wobei ein Fahrzeug (50), und/oder ein Klassifikationssystem (60), und/oder ein System (70) zur Qualitätskontrolle von in Serie gefertigten Produkten, und/oder ein System (80) zur medizinischen Bildgebung, mit diesem Ansteuersignal (20) angesteuert wird (260).

13. Verfahren (100, 200) nach einem der Ansprüche 1 bis 12, wobei das Entstörungsergebnis (12) dem trainierbaren Modul (3) erneut als mit der Störung (11b) behaftete Aufnahme (11, 11a) des Messsignals (10) zugeführt wird (190, 290).

14. Verfahren (100, 200) nach Anspruch 13, wobei das Zurückführen (190, 290) wiederholt wird, bis das Entstörungsergebnis (12) nach Maßgabe eines vorgegebenen Kriteriums konvergiert (180, 280).

15. Verfahren (100, 200) nach einem der Ansprüche 1 bis 14, wobei mindestens ein Entstörungsmodul (2a-2d) mehrere Submodule (2a1-2a3) sowie ein weiteres trainierbares Modul (3a) enthält, welches steuert, inwieweit die Wirkung dieses Entstörungsmoduls (2a-2d) aus den Wirkungen eines oder mehrerer Submodule (2a1-2a3) zusammengesetzt wird.

16. Verfahren (100, 200) nach einem der Ansprüche 1 bis 15, wobei die Aufnahme (11) des Messsignals (10) ein Bild, welches eine räumliche Verteilung mindestens einer physikalischen Messgröße repräsentiert, und/oder eine Zeitreihe, welche einen Zeitverlauf mindestens einer physikalischen Messgröße repräsentiert, beinhaltet.

17. Computerprogramm, enthaltend maschinenlesbare Anweisungen, die, wenn sie auf einem oder mehreren Computern ausgeführt werden, den oder die Computer dazu veranlassen, ein Verfahren (100, 200) nach einem der Ansprüche 1 bis 16 auszuführen.

18. Maschinenlesbarer Datenträger und/oder Downloadprodukt mit dem Computerprogramm nach Anspruch 17.

19. Computer, ausgerüstet mit dem Computerprogramm nach Anspruch 17, und/oder mit dem maschinenlesbaren Datenträger und/oder Downloadprodukt nach Anspruch 18.

## Claims

1. Computer-implemented method (100) for training a trainable module (3) for preparing recordings (11) of a measurement signal (10) that contain interference (11b), comprising the following steps:
• a trainable module (3) is provided (110) which is designed so as, in the trained state, to select, from a predetermined catalogue (2) of interference suppression modules (2a-2d), a combination of interference suppression modules (2a-2d) for a recording (11) of the measurement signal (10) whose application to the recording (11) is expected to improve suppression of the interference (11b) contained in the recording (11);
• the trainable module (3) is used to select a combination of interference suppression modules (2a-2d) for at least one learning recording (11a) of the measurement signal (10) (120);
• the selected combination is applied to the learning recording (11a) (130) to obtain an interference suppression result (12);
• a predetermined cost function (13) is used to determine an evaluation (14) (140) of the extent to which the interference (11b) is suppressed in the interference suppression result (12);
• a parameter set (33) that at least characterizes the behaviour of the trainable module (3) is optimized (160) with the aim of, when the same learning recording (11a), and/or further learning recordings (11a), is/are processed again, improving the evaluation (14) of the interference suppression result (12) that is then obtained by way of the cost function (13);
wherein the trainable module (3) supplies a weighting (5a-5d), which can be used to combine the interference suppression results (12) supplied by various interference suppression modules (2a-2d), as a selection of a combination of interference suppression modules (2a-2d).

2. Method (100) according to Claim 1, wherein the parameter set (33) additionally characterizes the behaviour of at least one interference suppression module (2a-2d).

3. Method (100) according to either of Claims 1 and 2, wherein the cost function (13) depends on the result of a comparison (13a) between the interference suppression result (12) and a known learning interference suppression result (12a), and/or on an automated evaluation (13b) of the interference suppression result (12) on the basis of at least one predetermined criterion (18), and/or on an evaluation (13c) of the interference suppression result (12) that has been received from at least one external evaluator (19).

4. Method (100) according to one of Claims 1 to 3, wherein
• the interference suppression result (12) is processed by a predetermined processing module (4) to produce a work result (15) (150) and
• the cost function (13) depends on the result of a comparison (13d) between the work result (15) and a known learning work result (15a).

5. Method (100) according to Claim 4, wherein the processing module (4) is in the form of a classifier and/or regressor that supplies a classification and/or regression of the interference suppression result (12) as the work result (15).

6. Method (100) according to one of Claims 1 to 5, wherein a trainable module (3) is selected which contains an artificial neural network (30), this artificial neural network (30) comprising a first sequence (31) of between 2 and 7 convolution layers (31a-31c) and a second sequence (32) of between 2 and 4 fully cross-linked layers (32a-32b).

7. Method (100) according to Claim 6, wherein an intermediate result (16) supplied by at least one of the convolution layers (31a-31c) as an output is evaluated using a pre-training cost function (17) (161) and wherein parameters (33) that characterize the behaviour of the first sequence (31) of the convolution layers (31a-31c) are optimized in advance (162) with the aim of improving the value of this pre-training cost function (17).

8. Method (100) according to Claim 7, wherein the pre-training cost function (17) depends on the result of a comparison (17a) between the intermediate result (16) and known additional information (16a) about the interference (11b).

9. Computer-implemented method (200) for preparing recordings (11) of a measurement signal (10) that contain interference (11b), comprising the following steps:
• at least one trainable module (3) trained using the method (100) according to one of claims 1 to 8 is provided (210);
• at least one recording (11) of the measurement signal (10) is routed to the trainable module (3) (220) so that the trainable module (3) selects a combination of interference suppression modules (2a-2d) from the predetermined catalogue (2) of interference suppression modules (2a-2d) by supplying a weighting (5a-5d) that can be used to combine the interference suppression results (2a*-2d*) supplied by the various interference suppression modules;
• the selected combination is applied to the recording (11) (230) so that an interference suppression result (12) is obtained.

10. Method (200) according to Claim 9, wherein the interference suppression result (12) is further-processed by a predetermined processing module (4) to produce a work result (15) (240).

11. Method (200) according to Claim 10, wherein the processing module (4) is in the form of a classifier and/or regressor that supplies a classification and/or regression of the interference suppression result (12) as the work result (15).

12. Method (200) according to one of Claims 9 to 11, wherein the interference suppression result (12), and/or the work result (15), are/is used to generate a control signal (20) (250) and wherein a vehicle (50), and/or a classification system (60), and/or a system (70) for quality control of mass-produced products, and/or a system (80) for medical imaging, are/is controlled using this control signal (20) (260).

13. Method (100, 200) according to one of Claims 1 to 12, wherein the interference suppression result (12) is routed to the trainable module (3) once more as a recording (11, 11a) of the measurement signal (10) that contains the interference (11b) (190, 290).

14. Method (100, 200) according to Claim 13, wherein the returning (190, 290) is repeated until the interference suppression result (12) converges according to a predetermined criterion (180, 280).

15. Method (100, 200) according to one of Claims 1 to 14, wherein at least one interference suppression module (2a-2d) contains multiple submodules (2a1-2a3) and a further trainable module (3a) that controls the extent to which the effect of this interference suppression module (2a-2d) is compiled from the effects of one or more submodules (2a1-2a3).

16. Method (100, 200) according to one of Claims 1 to 15, wherein the recording (11) of the measurement signal (10) includes an image representing a spatial distribution of at least one physical measured variable, and/or a time series representing a time characteristic of at least one physical measured variable.

17. Computer program containing machine-readable instructions that, when executed on one or more computers, cause the one or more computers to carry out a method (100, 200) according to one of Claims 1 to 16.

18. Machine-readable data carrier and/or download product having the computer program according to Claim 17.

19. Computer equipped with the computer program according to Claim 17 and/or with the machine-readable data carrier and/or download product according to Claim 18.

## Revendications

1. Procédé (100) mis en œuvre par ordinateur destiné à l'entraînement d'un module entraînable (3) pour la préparation d'enregistrements (11) d'un signal de mesure (10), affectés d'une défaillance (11b), comprenant les étapes suivantes :
• il est fourni (110) un module entraînable (3), qui est conçu pour sélectionner, à l'état entraîné, pour un enregistrement (11) du signal de mesure (10), dans un catalogue (2) prédéfini de modules de correction de défaillance (2a-2d), une combinaison de modules de correction de défaillance (2a-2d) dont l'application à l'enregistrement (11) améliore vraisemblablement une suppression de la défaillance (11b) contenue dans l'enregistrement (11) ;
• au moyen du module entraînable (3), une combinaison de modules de correction de défaillance (2a-2d) est sélectionnée (120) pour au moins un enregistrement d'apprentissage (11a) du signal de mesure (10) ;
• la combinaison sélectionnée est appliquée (130) à l'enregistrement d'apprentissage (11a) afin d'obtenir un résultat de correction de défaillance (12) ;
• au moyen d'une fonction de coût (13) prédéfinie, une évaluation (14) est déterminée (140) pour savoir dans quelle mesure la défaillance (11b) est supprimée dans le résultat de correction de défaillance (12) ;
• un jeu de paramètres (33), qui caractérise au moins le comportement du module entraînable (3), est optimisé (160) dans le but d'améliorer, lors d'un nouveau traitement du même enregistrement d'apprentissage (11a), et/ou d'autres enregistrements d'apprentissage (11a), l'évaluation (14) du résultat de correction de défaillance (12) alors obtenu par la fonction de coût (13) ; dans lequel le module entraînable (3) fournit une pondération (5a-5d) avec laquelle les résultats de correction de défaillance (12) fournis par différents modules de correction de défaillance (2a-2d) doivent être combinés, en tant que sélection d'une combinaison de modules de correction de défaillance (2a-2d).

2. Procédé (100) selon la revendication 1, dans lequel le jeu de paramètres (33) caractérise en outre le comportement d'au moins un module de correction de défaillance (2a-2d).

3. Procédé (100) selon l'une quelconque des revendications 1 à 2, dans lequel la fonction de coût (13) dépend du résultat d'une comparaison (13a) entre le résultat de correction de défaillance (12) et un résultat de correction de défaillance d'apprentissage connu (12a), et/ou d'une évaluation automatisée (13b) du résultat de correction de défaillance (12) sur la base d'au moins un critère prédéfini (18), et/ou d'une évaluation (13c) du résultat de correction de défaillance (12) obtenue par au moins un dispositif d'évaluation externe (19).

4. Procédé (100) selon l'une quelconque des revendications 1 à 3, dans lequel
• le résultat de correction de défaillance (12) est traité (150) par un module de traitement prédéfini (4) pour obtenir un résultat de traitement (15), et
• la fonction de coût (13) dépend du résultat d'une comparaison (13d) entre le résultat de traitement (15) et un résultat de traitement d'apprentissage connu (15a).

5. Procédé (100) selon la revendication 4, dans lequel le module de traitement (4) est réalisé sous forme de classificateur et/ou de régresseur qui délivre une classification et/ou une régression du résultat de correction de défaillance (12) sous forme de résultat de traitement (15).

6. Procédé (100) selon l'une quelconque des revendications 1 à 5, dans lequel un module entraînable (3) comprenant un réseau neuronal artificiel (30) est sélectionné, ledit réseau neuronal artificiel (30) comprenant une première séquence (31) de 2 à 7 couches convolutives (31a-31c) et une deuxième séquence (32) de 2 à 4 couches entièrement connectées (32a-32b).

7. Procédé (100) selon la revendication 6, dans lequel un résultat intermédiaire (16) délivré en sortie par au moins une des couches de convolution (31a-31c) est évalué (161) par une fonction de coût de pré-entraînement (17), et dans lequel des paramètres (33) caractérisant le comportement de la première séquence (31) des couches de convolution (31a-31c) sont préalablement optimisés (162) dans le but d'améliorer la valeur de ladite fonction de coût de pré-entraînement (17).

8. Procédé (100) selon la revendication 7, dans lequel la fonction de coût de pré-entraînement (17) dépend du résultat d'une comparaison (17a) entre le résultat intermédiaire (16) et une information complémentaire connue (16a) relative à la défaillance (11b).

9. Procédé mis en œuvre par ordinateur (200) pour préparer des enregistrements (11) d'un signal de mesure (10), affectés par une défaillance (11b), comprenant les étapes suivantes :
• il est fourni (210) au moins un module entraînable (3) ayant été entraîné par le procédé (100) selon l'une quelconque des revendications 1 à 8 ;
• au moins un enregistrement (11) du signal de mesure (10) est délivré (220) au module entraînable (3), de telle sorte que le module entraînable (3) sélectionne une combinaison de modules de correction de défaillance (2a-2d) dans le catalogue prédéfini (2) de modules de correction de défaillance (2a-2d), en faisant en sorte qu'il délivre une pondération (5a-5d) avec laquelle les résultats de correction de défaillance (2a*-2d*) délivrés par les différents modules de correction de défaillance doivent être combinés ;
• la combinaison sélectionnée est appliquée (230) à l'enregistrement (11) de manière à obtenir un résultat de correction de défaillance (12).

10. Procédé (200) selon la revendication 9, dans lequel le résultat de correction de défaillance (12) est soumis à un traitement ultérieur (240) par un module de traitement (4) prédéfini pour obtenir un résultat de traitement (15).

11. Procédé (200) selon la revendication 10, dans lequel le module de traitement (4) est réalisé sous forme de classificateur et/ou de régresseur qui délivre une classification et/ou une régression du résultat de correction de défaillance (12) en tant que résultat de traitement (15).

12. Procédé (200) selon l'une quelconque des revendications 9 à 11, dans lequel un signal de commande (20) est généré (250) à partir du résultat de correction de défaillance (12), et/ou à partir du résultat de traitement (15), et dans lequel un véhicule (50), et/ou un système de classification (60), et/ou un système (70) de contrôle de la qualité de produits fabriqués en série, et/ou un système (80) d'imagerie médicale, sont commandés (260) au moyen dudit signal de commande (20).

13. Procédé (100, 200) selon l'une quelconque des revendications 1 à 12, dans lequel le résultat de correction de défaillance (12) est à nouveau délivré (190, 290) au module entraînable (3) en tant qu'enregistrement (11, 11a) du signal de mesure (10) affecté par la défaillance (11b).

14. Procédé (100, 200) selon la revendication 13, dans lequel le renvoi (190, 290) est répété jusqu'à ce que le résultat de correction de défaillance (12) converge (180, 280) conformément à un critère prédéfini.

15. Procédé (100, 200) selon l'une quelconque des revendications 1 à 14, dans lequel au moins un module de correction de défaillance (2a-2d) comprend plusieurs sous-modules (2a1-2a3) ainsi qu'un autre module entraînable (3a) qui commande la façon dont l'effet dudit module de correction de défaillance (2a-2d) se compose des effets d'un ou plusieurs sous-modules (2a1-2a3).

16. Procédé (100, 200) selon l'une quelconque des revendications 1 à 15, dans lequel l'enregistrement (11) du signal de mesure (10) comprend une image représentant une répartition spatiale d'au moins une grandeur physique mesurée et/ou une série temporelle représentant une évolution temporelle d'au moins une grandeur physique mesurée.

17. Programme informatique comprenant des instructions lisibles par machine qui, lorsqu'elles sont exécutées sur un ou plusieurs ordinateurs, amènent le ou les ordinateurs à mettre en œuvre un procédé (100, 200) selon l'une quelconque des revendications 1 à 16.

18. Support de données lisible par machine et/ou produit à télécharger comprenant le programme informatique selon la revendication 17.

19. Ordinateur, équipé du programme informatique selon la revendication 17 et/ou du support de données lisible par machine et/ou du produit à télécharger selon la revendication 18.
